# EUROPEAN PATENT APPLICATION

(11) **EP 2 312 867 A1**
(43) Date of publication of application: **20.04.2011**
(21) Application number: 09804943.0
(22) Date of filing: 03.08.2009
(51) Int. Cl.: H04Q 9/00, E02F 9/20

(54) **COMMUNICATION SYSTEM**

(30) Priority: 04.08.2008 JP 2008200801
(71) Applicant: Hitachi Construction Machinery Co., Ltd, Tokyo 112-0004 (JP)
(72) Inventor: KANEHAMA Mitsuhiko, Tsuchiura-shi Ibaraki 300-0013 (JP); TSUKADA Hidenobu, Tsuchiura-shi Ibaraki 300-0013 (JP); ISHIKAWA Kouji, Tsuchiura-shi Ibaraki 300-0013 (JP)
(74) Representative: Jansen, Cornelis Marinus
(86) International application number: PCT/JP2009/063746
(87) International publication number: WO 2010/016460

(57) **Abstract**

In a work machine, a communication system is provided, in which, when damage of disconnection or the like of a communication line occurs, desired communication is enabled without requiring manual replacement of the damaged communication line. The communication system is provided in a hydraulic excavator and comprises a vehicle body controller 12 and a monitor controller 13, serving as a first controller coupled to each of a drive-system communication line 10 and an information-system communication line 11. The communication system also comprises an engine controller 14, serving as a second controller coupled to either one of the communication lines 10 and 11. When a damaged part A develops at a portion of a drive-system communication line 10 located between the vehicle body controller 12 and the engine controller 14 and communication between the vehicle body controller 12 and the engine controller 14 becomes impracticable, the communication between the vehicle body controller 12 and the engine controller 14 is made practicable, by detouring the communication through the information and communication line 11 which has not suffered the damage, and through the monitor controller 13.

## Description

### TECHNICAL FIELD

The present invention relates to a communication system in which a communication network is formed by a communication line and plural controllers, especially to a communication system to be provided in a work machine, such as a hydraulic excavator.

### BACKGROUND ART

Patent Literature 1 discloses a previously existing communication system in which a communication network is formed by a communication line and plural controllers. The previously existing technology illustrates a network communication line which is mounted in a vessel etc. The network communication line comprises two communication lines, a first controller, namely a node A, coupled to each of the communication lines, and second controllers, namely nodes E, B, and C, which are coupled to one of the communication lines directly. The network communication line also comprises an exclusive controller, namely a node D, which is coupled to the communication lines and detects disconnection of the communication lines.

In the previously existing technology, when the node D serving as the exclusive controller detects that disconnection has occurred at a portion of a communication line which couples the node B serving as the second controller and the node A serving as the first controller, and that communication between the node B and the node A has become impracticable, then, according to a detection signal generated by the node D, the communication is detoured via the other communication line in which the disconnection has not occurred, as a result, the communication between the node B and the node A is made practicable.

### CITATION LIST

### PATENT LITERATURE

(Patent Literature 1): Japanese Patent No. 3630418

### SUMMARY OF INVENTION

### TECHNICAL PROBLEM

The invention disclosed by Patent Literature 1 described above relates to a vessel etc.; however, nowadays, also in a work machine such as a hydraulic excavator, a communication network has been formed by a communication line and plural controllers. In the field of the work machine, when damage such as disconnection or the like has occurred in a portion of a communication line which couples plural controllers, the damaged communication line has been replaced manually in the past. However, in the work machine, the communication line is long because of the work machine structure; therefore, the replacement of the communication line is complicated and tends to require large work hours. Accordingly, various kinds of work to be performed by the work machine are forced to stop, and working efficiency of the work machine falls.

The present invention has been made in view of the actual situation described above in the previously existing technology and provides a communication system in which, when a work machine suffers damage such as disconnection or the like of a communication line, desired communication is enabled without requiring manual replacement of the communication line.

### SOLUTION TO PROBLEM

In order to attain the purpose, in a communication system according to the present invention, a communication network is formed by at least two communication lines, a first controller coupled to each of the at least two communication lines, and a second controller coupled to one of the at least two communication lines. When damage occurs at some part of the at least two communication lines, disenabling communication between the first controller and the second controller, the communication between the first controller and the second controller is enabled by making a detour of the communication via a communication line which has not suffered the damage among the at least two communication lines to which the first controller is coupled. The communication system is adopted in a work machine, and comprises at least two first controllers. In the communication system, the second controller is coupled to one of communication lines which are respectively coupled to each of the at least two first controllers. When damage occurs at a communication line located between one of the first controllers and the second controller, disenabling communication between the corresponding first controller and the second controller, the communication between the corresponding first controller and the second controller is enabled by making a detour of the communication via a communication line which has not suffered the damage and couples the corresponding first controller and another first controller, and via the another first controller.

According to the present invention which is configured as described above, communication which is carried out during operation of a work machine for example, between the first controller coupled to each of at least two communication lines and the second controller coupled to one of the communication lines, can be carried out without trouble via a communication line to which the first controller and the second controller are coupled.

For example, in a situation where such normal communication is carried out, when damage such as disconnection or the like occurs at a portion of a communication line located between either one of the at least two first controllers and the second controller, due to strong vibration etc. applied in an aged deterioration state, and when the communication between the corresponding first controller and the second controller is disenabled, the communication between the corresponding first controller and the second controller is enabled, by making a detour through an undamaged communication line which couples the corresponding first controller and another controller, and through the another controller. That is, in a work machine, at the time of damage such as disconnection or the like of a communication line, the desired communication between the corresponding first controller and the second controller for which the communication has become impracticable temporarily becomes practicable in a short time, without requiring manual replacement of the communication line.

In the communication system according to the present invention, in the range of the above-described invention, each of the first controllers and the second controller communicate a control signal related to control of the work machine.

In the communication system according to the present invention, in the range of the above-described invention, upon receiving a control signal related to control of the work machine from the first controller, the second controller controls a device provided in the work machine according to the control signal.

In the communication system according to the present invention, in the range of the above-described invention, the work machine is a hydraulic excavator comprising an undercarriage, a rotating platform, and a front work machine; the at least two communication lines comprise a drive-system communication line related to a drive of the work machine, and an information-system communication line related to a monitor provided in the work machine; the at least two first controllers comprise a vehicle body controller and a monitor controller; and the second controller comprises an engine controller.

### ADVANTAGEOUS EFFECTS OF INVENTION

The communication system according to the present invention is provided in a work machine and comprises at least two first controllers, and the second controller is coupled to one of communication lines which are respectively coupled to each of the first controllers. When damage occurs at a communication line located between one of the first controllers and the second controller, disenabling communication between the corresponding first controller and the second controller, the communication between the corresponding first controller and the second controller is enabled by making a detour of the communication via an undamaged communication line which couples the corresponding first controller and another first controller, and via the another first controller. Therefore, in the work machine, the desired communication can be enabled without requiring manual replacement of a communication line at the time of damage such as disconnection or the like of the communication line. Accordingly, even at the time of damage such as disconnection or the like of a communication line, work of the construction machine concerned can be continued and the working efficiency can be improved compared with the past.

### BRIEF DESCRIPTION OF DRAWINGS

Fig. 1 is a side view illustrating a hydraulic excavator as an example of a work machine which is provided with an embodiment of the communication system according to the present invention;
Fig. 2 is a drawing illustrating constitution of substantial parts of the communication system according to the present embodiment; and
Fig. 3 is a flow chart illustrating procedure in each of a vehicle body controller, a monitor controller, and an engine controller, provided in the present embodiment.

### DESCRIPTION OF EMBODIMENTS

The best mode for practicing the communication system according to the present invention is explained hereinafter, based on the accompanying drawings.

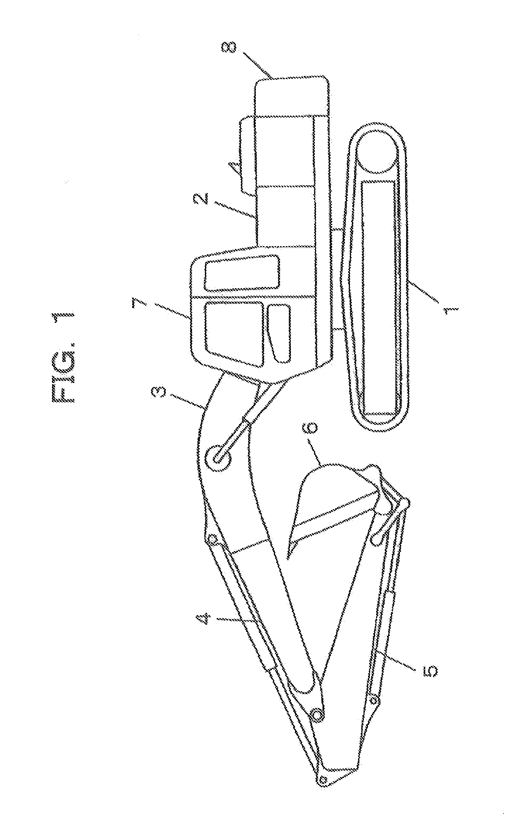

Fig. 1 is a side view illustrating a hydraulic excavator as an example of a work machine which is provided with an embodiment of the communication system according to the present invention.

The hydraulic excavator illustrated in Fig. 1 comprises an undercarriage 1, a rotating platform 2 which is arranged on the undercarriage 1, and a front work machine 3 which is attached to the rotating platform 2 in a rotatable manner in the up-and-down direction and carries out excavation works of an earth and sand, etc. The front work machine 3 comprises a boom 4 which is attached to the rotating platform 2 in a rotatable manner in the up-and-down direction, an arm 5 which is attached at a tip of the boom 4 and rotatable in the up-and-down direction, and a bucket 6 which is attached at a tip of the arm 5 and rotatable in the up-and-down direction. An operator's cab 7 provided with an operating device for driving the front work machine 3 and others is provided in the anterior position of the rotating platform 2, and a counter weight 8 for securing weight balance is provided in the posterior position.

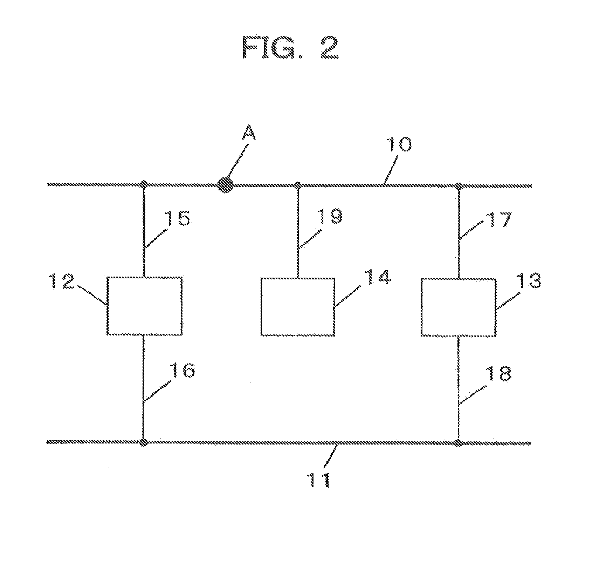

Fig. 2 is a drawing illustrating constitution of substantial parts of the communication system according to the present embodiment. The communication system according to the present embodiment comprises, as illustrated in Fig. 2, at least two communication lines, for example, a drive-system communication line 10 through which a control signal of a drive system is transmitted, and an information-system communication line 11 through which a control signal of an information system is transmitted. The communication system also comprises a first controller coupled to each of the drive-system communication line 10 and the information-system communication line 11, and a second controller coupled to one of the communication lines 10 and 11, for example, to the drive-system communication line 10. A communication network is formed by the drive-system communication line 10, the information-system communication line 11, the first controller, and the second controller.

The present embodiment possesses at least two of the first controller described above. The two first controllers are a vehicle body controller 12 related to drive controlling of the hydraulic excavator, and a monitor controller 13 related to display processing of a monitor arranged in the operator's cab 7 illustrated in Fig. 1, for example. The vehicle body controller 12 is coupled to the drive-system communication line 10 via a wiring 15, and coupled to the information-system communication line 11 via a wiring 16. The monitor controller 13 is coupled to the drive-system communication line 10 via a wiring 17, and coupled to the information-system communication line 11 via a wiring 18. The vehicle body controller 12 and the monitor controller 13 can communicate with any of the drive-system communication line 10 and the information-system communication line 11. The vehicle body controller 12 and the monitor controller 13 are both arranged in the operator's cab 7 illustrated in Fig. 1, for example.

The second controller described above comprises an engine controller 14 for controlling an engine which is one of the devices provided in the hydraulic excavator, for example. As illustrated in Fig. 2, the second controller is coupled, via a wiring 19, to one of the communication lines 10 and 11 (for example, to the drive-system communication line 10) coupling mutually the vehicle body controller 12 and the monitor controller 13 which serve as the first controller. The engine controller 14 is arranged in a machine room provided between the operator's cab 7 and the counter weight 8.

As a control signal to be transmitted from the vehicle body controller 12 to the engine controller 14, a target engine rotation speed signal is transmitted. As a control signal to be transmitted from the engine controller 14 to the vehicle body controller 12, an actual engine rotation speed signal is transmitted.

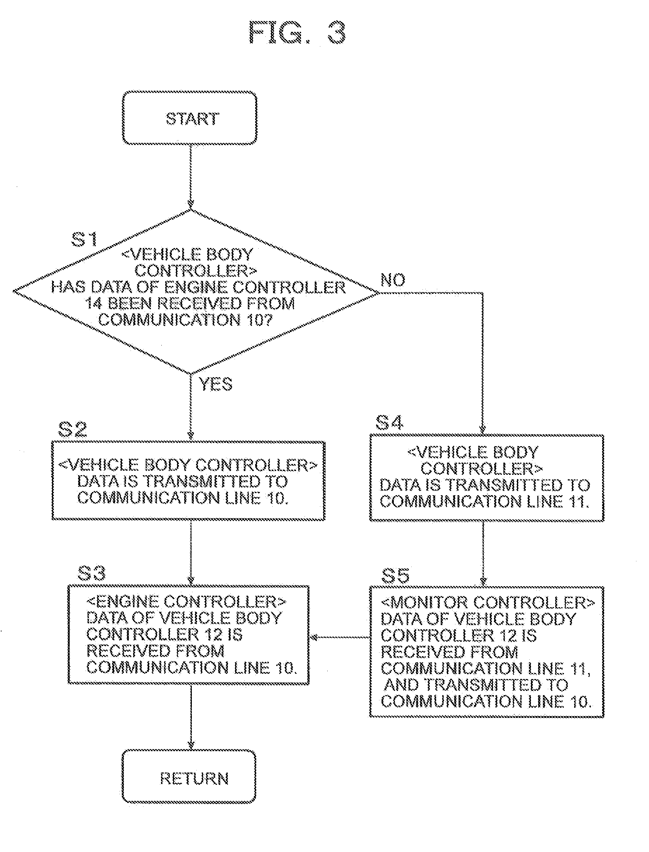

Fig. 3 is a flow chart illustrating procedure in each of the vehicle body controller, the monitor controller, and the engine controller, provided in the present embodiment.

In the communication system according to the present embodiment configured as described above, communication to be performed for example during an excavation work by driving the front work machine 3, between the vehicle body controller 12 serving as the first controller, which is coupled to the drive-system communication line 10 and to the information-system communication line 11, and the engine controller 14 serving as the second controller can be performed without trouble via the drive-system communication line 10 to which the vehicle body controller 12 and the engine controller 14 are coupled.

That is, as illustrated in Fig. 3, determination made by the vehicle body controller 12 of whether data of the engine controller 14 has been received from the drive-system communication line 10 becomes "yes" (Step S1). Data is transmitted from the vehicle body controller 12 to the drive-system communication line 10 via the wiring 15 (Step S2), and the engine controller 14 receives the data of the vehicle body controller 12 from the drive-system communication line 10 via the wiring 19 (Step S3).

For example, in a situation where such normal communication is carried out, when a damaged part A such as disconnection or the like develops at a portion of the drive-system communication line 10 located between the vehicle body controller 12 and the engine controller 14, due to strong vibration etc. accompanying the work by the front work machine 3, applied in an aged deterioration state, and when the communication between the vehicle body controller 12 and the engine controller 14 is disenabled, the communication between the vehicle body controller 12 and the engine controller 14 is enabled, by making a detour through the information-system communication line 11 functioning as an undamaged communication line which couples the vehicle body controller 12 and the other controller of the two first controllers, namely, the monitor controller 13, and through the monitor controller 13 as the other controller.

That is, as illustrated in Fig. 3, when the vehicle body controller 12 determines that data of the engine controller 14 can not be received from the drive-system communication line 10 because of the damaged part A developed in the drive-system communication line 10 (Step S1), data is transmitted from the vehicle body controller 12 to the information-system communication line 11 via the wiring 16 (Step S4), the monitor controller 13 receives the data of the vehicle body controller 12 from the information-system communication line 11 via the wiring 18, and transmits the data to the drive-system communication line 10 via the wiring 17 (Step S5). Accordingly, the engine controller 14 can receive the data of the vehicle body controller 12 from the drive-system communication line 10 via the wiring 19 (Step S3).

As described above, according to the communication system related to the present embodiment, in the hydraulic excavator, at the time of damage such as disconnection or the like of the drive-system communication line 10, the desired communication between the vehicle body controller 12 and the engine controller 14 for which the communication has become impracticable temporarily can be enabled in a short time, without requiring manual replacement of the drive-system communication line 10. Accordingly, even at the time of damage of disconnection or the like of the drive-system communication line 10, it is possible to continue work of the hydraulic excavator and the working efficiency can be improved.

In the above, the damage which has occurred at a portion of the drive-system communication line 10 located between the vehicle body controller 12 and the engine controller 14 is explained as an example. However, when damage occurs at a portion of the drive-system communication line 10 located between the monitor controller 13 and the engine controller 14, it is possible to transmit data from the monitor controller 13 to the engine controller 14, in the same manner as in the case described above, by making a detour through the information-system communication line 11, the vehicle body controller 12, and the drive-system communication line 10.

When damage occurs at a portion of the information-system communication line 11 located between the vehicle body controller 12 and the monitor controller 13, communication between the vehicle body controller 12 and the monitor controller 13 can be performed via the drive-system communication line 10.

In the above description, two controllers, the vehicle body controller 12 and the monitor controller 13, are provided as the first controller coupled to each of the drive-system communication line 10 and the information-system communication line 11. However, it is also preferable to provide three or more of the first controller coupled to each of the drive-system communication line 10 and the information-system communication line 11.

The engine controller 14 is provided as the second controller. However, it is also preferable to configure the communication system such that, as the second controller, for example, an information controller which processes information may be provided in addition to the engine controller 14, and the information controller is coupled to the information-system communication line 11.

### REFERENCE SIGNS LIST

- 1: undercarriage
- 2: rotating platform
- 3: front work machine
- 4: boom
- 5: arm
- 6: bucket
- 7: operator's cab
- 8: counter weight
- 10: drive-system communication line
- 11: information-system communication line
- 12: vehicle body controller (first controller)
- 13: monitor controller (first controller)
- 14: engine controller (second controller)
- 15: wiring
- 16: wiring
- 17: wiring
- 18: wiring
- 19: wiring
- A: damaged part

## Claims

1. Acommunication system in which a communication network is formed by at least two communication lines, a first controller coupled to each of the at least two communication lines, and a second controller coupled to one of the at least two communication lines, and in which, when damage occurs at some part of the at least two communication lines, disenabling communication between the first controller and the second controller, the communication between the first controller and the second controller is enabled by making a detour of the communication via a communication line which has not suffered the damage among the at least two communication lines to which the first controller is coupled, the communication system
being adopted in a work machine, and
comprising at least two first controllers,
wherein the second controller is coupled to one of communication lines which are respectively coupled to each of the at least two first controllers, and
wherein, when damage occurs at a communication line located between one of the first controllers and the second controller, disenabling communication between the first controller concerned and the second controller, the communication between the first controller concerned and the second controller is enabled by making a detour of the communication via a communication line which has not suffered the damage and couples the first controller concerned and another first controller, and via the another first controller.

2. The communication system of Claim 1,
wherein each of the first controllers and the second controller communicate a control signal related to control of the work machine.

3. The communication system of Claim 1,
wherein upon receiving a control signal related to control of the work machine from the first controller, the second controller controls a device provided in the work machine according to the control signal.

4. The communication system of Claim 1,
wherein the work machine is a hydraulic excavator comprising an undercarriage, a rotating platform, and a front work machine,
wherein the at least two communication lines comprise a drive-system communication line related to a drive of the work machine, and an information-system communication line related to a monitor provided in the work machine, and
wherein the at least two first controllers comprise a vehicle body controller and a monitor controller, and the second controller comprises an engine controller.
